Europäisches Patentamt

European Patent Office

Office européen des brevets

(11) Publication number: **0 094 147**
**B1**

(12) EUROPEAN PATENT SPECIFICATION

(45) Date of publication of patent specification: **13.05.87**

(51) Int. Cl.⁴: **B 01 J 3/06, C 04 B 35/58**

(21) Application number: **83301631.4**

(22) Date of filing: **23.03.83**

(54) Improved sweep through process for making polycrystalline compacts.

(30) Priority: **02.04.82 US 364714**

(43) Date of publication of application:
**16.11.83 Bulletin 83/46**

(45) Publication of the grant of the patent:
**13.05.87 Bulletin 87/20**

(84) Designated Contracting States:
**BE CH DE FR GB IT LI SE**

(56) References cited:
**EP-A-0 079 117**
**CH-A- 450 374**
**GB-A-1 382 080**
**GB-A-1 598 837**
**GB-A-2 048 956**
**US-A-3 743 489**

(73) Proprietor: **GENERAL ELECTRIC COMPANY**
**1 River Road**
**Schenectady New York 12305 (US)**

(72) Inventor: **Gigl, Paul Donald**
**398 Pittsfield Drive**
**Worthington, OH 43085 (US)**
Inventor: **Cho, Hyun Sam**
**6719 Elmers Court**
**Worthington, OH 43085 (US)**

(74) Representative: **Allam, Peter Clerk et al**
**LLOYD WISE, TREGEAR & CO. Norman House**
**105-109 Strand**
**London WC2R 0AE (GB)**

Courier Press, Leamington Spa, England.

## Description

Technical Field

This invention is related to the high pressure/high temperature (HP/HT) process for making diamond and cubic boron nitride (CBN) compacts. More particularly, it is related to a modification of the HP/HT process which can result in increased yield in the production of such compacts through a reduction in the occurrence of defects, such as poorly sintered zones and irregularities.

Background

A compact is a sintered polycrystalline mass of abrasive particles (e.g. diamond) bonded together to form an integral, tough, coherent, high-strength mass. A composite compact is a compact bonded to a substrate material, such as a cemented metal carbide (e.g. cobalt cemented tungsten carbide). The metal bonded carbide mass is generally selected from the group consisting of tungsten, titanium, tantalum carbides and mixtures thereof with metal bonding material therein normally being present in a quantity from about 6 to 25 weight percent and selected from the group consisting of cobalt, nickel, iron and mixtures thereof. Other metal carbides can be used.

Compacts or composite compacts may be used as blanks for cutting tools, drill bits, dressing tools, and wear parts. Compacts made in a cylindrical configuration have been used to make wire drawing dies (see U.S. Patent 3,831,428).

One method for manufacturing diamond compacts involves the steps of:

A. placing within a protective shield metal enclosure which is disposed within the reaction cell of an HP/HT apparatus:

(1) a mass of diamond crystals; and

(2) a mass of catalyst metal or alloy containing catalyst metal in contact with the mass of diamond crystals; and

B. subjecting the contents of the cell to conditions of temperature, pressure and time (typically at least 50 kbar, at least 1300° C and 3—120 minutes) sufficient to give bonding between adjacent crystal grains.

The mass of crystal metal can be in the form of a disc of one of the well known catalysts or an alloy containing at least one catalyst metal for diamond crystallization. Under the HP/HT conditons, a wave of liquid metal advances through the dense diamond or CBN material, and the catalyst metal (in liquid form) makes itself available as a catalyst or solvent for recrystallization or diamond crystal intergrowth. The terms catalyst and catalyst/solvent are used interchangeably. This process is sometimes known as the sweep through method, i.e. the catalyst sweeps (or advances or diffuses) through the diamond mass.

The relative shapes of the abrasive mass and catalyst can be varied. For example, the mass of diamond can be cylindrical, and the catalyst can be an annular shape surrounding the cylinder of abrasive crystals or a disc on top of or below the diamond mass.

The source of catalyst may also be cemented metal carbide or carbide molding powder (which may be cold pressed to shape) wherein the cementing agent is a catalyst or solvent for diamond recrystallization or growth.

The catalyst is generally selected from cobalt, nickel and iron, but can be selected from any of the known catalysts which also include ruthenium, rhodium, palladium, platinum, chromium, manganese, tantalum or mixtures or alloys of catalysts. Catalyst may be mixed with the abrasive crystals in addition to or instead of being a separate mass adjacent to the abrasive crystals.

High temperature and high pressure in the diamond stable region are applied for a time sufficient to bond or sinter the diamond crystals together. The diamond stable region is the range of pressure temperature conditions under which diamond is thermodynamically stable. On a pressure temperature phase diagram, it is the high pressure side, above the equilibrium line between diamond and graphite. The resulting compact is characterized particularly by diamond-to-diamond bonding, i.e. bonding between adjacent grains whereby there are parts of the crystal lattice which are shared between neighboring crystal grains (resulting from recrystallization at HP/HT conditions). The diamond concentration is preferably at least 70 volume percent of the diamond mass (i.e. excluding any substrate mass). Methods for making diamond compacts are detailed in for example U.S. Patents 3,141,746; 3,745,623; 3,609,818; 3,831,418; and 3,850,591.

Cubic boron nitride compacts are manufactured in a similar manner to that just described for diamond. However, in making a CBN compact by the sweep through method, the metal swept through into the CBN crystal mass may or may not be a catalyst or solvent for CBN recrystallization. Thus a mass of polycrystalline CBN can be bonded to a cobalt cemented tungsten carbide substrate by sweep through of the cobalt ingredient into the interstices of the CBN mass under HP/HT conditions, even though cobalt is not a catalyst for CBN. This interstitial cobalt binds the polycrystalline CBN to the cemented tungsten carbide substrate. Nevertheless, the term catalyst will be used to describe the bonding or sintering metal swept into a CBN particle mass for the sake of convenience. In either the case of diamond or CBN composite compacts, the cobalt depletion of the substrate is not enough to be detrimental to the support function of the substrate.

The HP/HT sintering process for CBN is carried out in the CBN stable region which is the range of pressure and temperature conditions under which CBN is thermodynamically stable. CBN concentration is preferably at least 70 volume percent of the CBN mass. Methods for making CBN compacts are detailed in for example, U.S. Patents 3,233,988; 3,743,489; and 3,767,371. Crystal intergrowth or crystal-to-crystal bonding between neighboring CBN grains (as described for diamond compacts) is believed to be present.

The manufacture of thermally stable compacts is described in U.S. Patents 4,288,248 and 4,224,380. These patents teach the removal of substantially all of the metallic (catalyst) phase from compacts to yield a compact comprising self-bonded diamond or CBN particles with an interconnected network of pores dispersed throughout. Such compacts can withstand exposure to temperatures of about 1200°C to 1300°C without substantial thermal degradation, an advantage over the compacts of, for example U.S. Patent 3,745,623 which are thermally degraded at a temperature of between about 700°C and 900°C. Thermal degradation is indicated by a marked loss (e.g. 50%) in physical properties, such as decreased abrasion resistance, transverse rupture strength and modulus of elasticity with increasing temperatures. The metallic or catalyst phase is removed by acid treatment, liquid zinc extraction, electrolytic depletion or similar pocesses. The compacts of this type will be referred to throughout as thermally stable compacts.

Fine diamond feed material has always been difficult to sinter by the sweep through method. Generally, sintering becomes increasingly difficult as the feed material particle size decreases. One of the smaller sizes of diamond feed materials (particles having a nominal largest dimension of 4—8 microns) has been a problem for some time because its large surface area and small size causes difficulties when cleaning, handling or loading the fine powder into a reaction cell. However, it is also known that as the grain size of diamond compacts decreases, transverse rupture strength increases, the giving compacts made with smaller particles an advantage. Under the high pressures (e.g. 50 kbar and greater) applied during the HP/HT process, such fine abrasive crystals compact resulting in a rather high packing density and a very fine pore structure. The resulting diamond mass, therefore, is dense and offers resistance to the percolation or sweep through of catalyst metal through the interstices.

Flaws develop in sintered diamond and CBN dring the production of compacts. Examples of such flaws are poorly or non-uniformly bonded zones in the sintered diamond or CBN volume. Such flaws are characterized by: lower hardness than the non-flawed areas; high concentration of catalysts; less crystal to crystal bonding; different color from the non-flawed areas (gray as opposed to black for well sintered diamond); or different texture. In the case of cutting tool or wire die compacts, such flaws can sometimes be removed by mechanical means, such as lapping out the flawed area if it is near the surface. Since the inside of a wire drawing die does the drawing rather than the outside edge, as in the case of a cutting tool, the internal flaws are much more critical in a wire die. Consequently, any reduction in the frequency of poorly bonded zones is a worthwhile process improvement.

Another problem is the formation of shallow, metal carbide filled pits in the diamond or CBN surface at the interface with the metal carbide of a composite compact. These defects are exposed when the non-diamond or non-CBN material is removed in making such articles as thermally stable compacts (see U.S.P. 4,224,380) or finished cutting tool inserts or blanks.

There is a relationship between the compact size and the micron size of the diamond or CBN raw material particles and the occurrence of flaws. Flaw frequency increases as particle size decreases for a given size compact. Flaw frequency also increases as compact size (i.e., the distance the catalyst/solvent must sweep through) increases. Thus, the reduction of flaws is most critical in the case of relatively large compacts made with small (less than 10 micron) particles.

British Patents 1,478,510 and 1,527,328 describe compacts of diamond and CBN respectively which are made with a bonding medium selected from a variety of materials which include intermetallic compounds of copper. Copper is also a known ingredient of metal bond powders for impregnated, metal matrix diamond tools. It is also a known coating metal for diamond.

The method described herein represents a new use for copper and other relatively lower melting metals in the HP/HT sweep through compact manufacturing process.

Disclosure of Invention

The HP/HT, sweep through process as previously described in the background section has been improved by placing in contact wiith the diamond or CBN mass an additional metal which: has a lower melting point than the catalyst; does not interfere with the function of the catalyst; and is miscible with the catalyst. The disposition of the diamond or CBN particles of the catalyst source and of the additional metal in the reaction cell is such that the lower melting additional metal sweeps through the diamond or CBN mass ahead of the catalyst. Thus, the lower melting metal may initially be mixed with the diamond or CBN or placed between the catalyst source and the diamond or CBN mass. For example, a copper sheet or disc (normally less than 250 microns thick) could be placed between a cobalt disc (or cobalt cemented tungsten carbide disc in the case of composite compacts) and the diamond or CBN mass. The catalyst metal sweeps the lower melting metal out and may alloy with it, leaving remnants (of for example copper) in the compact. Other metals beside copper which fall in the class of metals described are aluminum, zinc, tin, antimony and magnesium, when cobalt is the catalyst. Silver and lead were tried and did not work. A possible explanation is that they are immiscible with cobalt. Normally most of the lower melting remnants would be at the surface farthest from where the catalyst source was during HP/HT processing.

The amount of additional metal should be large enough to establish a sweep through of additional metal through the whole cross section of the diamond or CBN mass. The amount should not, however, be so much as to inhibit the catalyst sweep through or the functioning of the catalyst. When copper is used as the additional metal for example as a disc between the diamond and catalyst source and having the same diameter as the diamond mass, a preferred range of thickness is 25 to 250 microns of copper for a diamond layer about 4.3 mm thick.

Having a lower melting point than the catalyst, the lower melting metal becomes mobile before the catalyst (i.e., sooner during the heating of the HP/HT cell). The function of the intermediate material appears to be to move impurities on the surfaces or in the interstices of the diamond or CBN powder ahead of the advancing catalyst. It also seems to lubricate or aid the rearrangement and compaction of the diamond or CBN powder before sintering. This phenomenon may allow the abrasive powder to be more uniformly compacted ahead of the advancing catalyst metal, avoiding bridging.

Non-catalytic alloys containing a lower melting additional metal may also be used, so long as they do not interfere with the function of the catalyst.

The resulting sintered mass can be finished by the normal methods to prepare a tool or die blank. The additional intermediate or lower melting metal must be active enough to remove or displace contaminants (e.g. air) and non-reactive or inert to the diamond or CBN powder and the catalyst used under the HP/HT conditions used.

Brief Description of the Figures

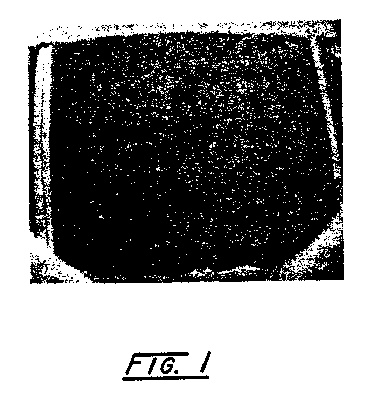

Figure 1 is a photomicrograph (at 20 × magnification) of a cross section of a cylindrical diamond compact (about 5.3 mm diameter and 3.5 mm long) made by the process of this invention, using copper as the lower melting metal and cobalt as the catalyst.

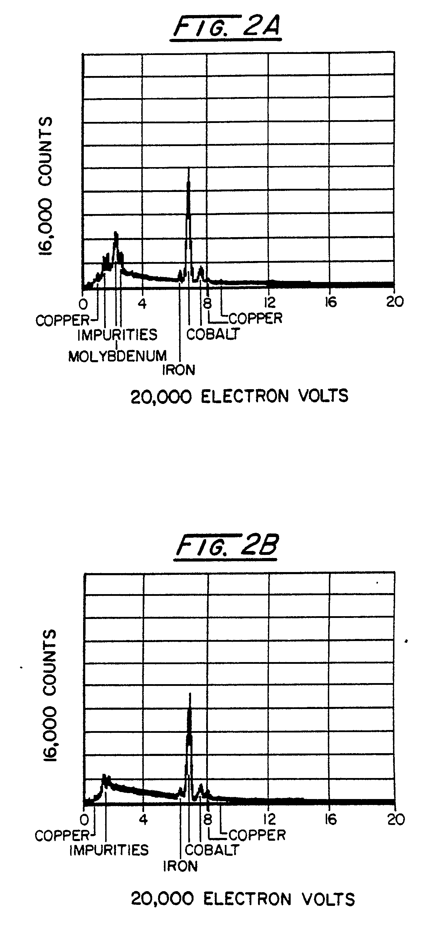

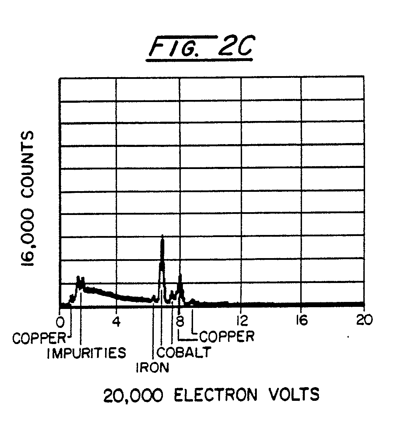

Figures 2A—C are energy dispersive X-ray spectra for several points through a cross-section of the cylindrical diamond compact of Figure 1. In each case the total length of the vertical scale is 16,000 X-ray counts, and the total length of the horizontal scale is 20,000 electron volts. Figure 2A indicates copper and cobalt concentration at the surface which was next to the catalyst source. Figure 2B indicates copper and cobalt concentration at a point near the middle of the sintered diamond. Figure 2C shows copper and cobalt concentration near the surface of the compact furthest from where the crystal source has been made.

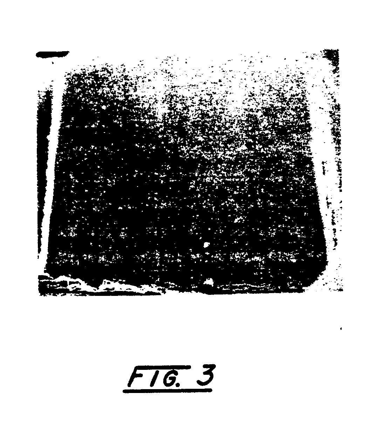

Figure 3 is a photomicrograph (at 20 × magnification) of a cross section of a cylindrical diamond compact (about 5.3 mm long) made by the sweep through process using cobalt catalyst without the improvement described herein and evidencing an internal flaw toward the bottom of the photo.

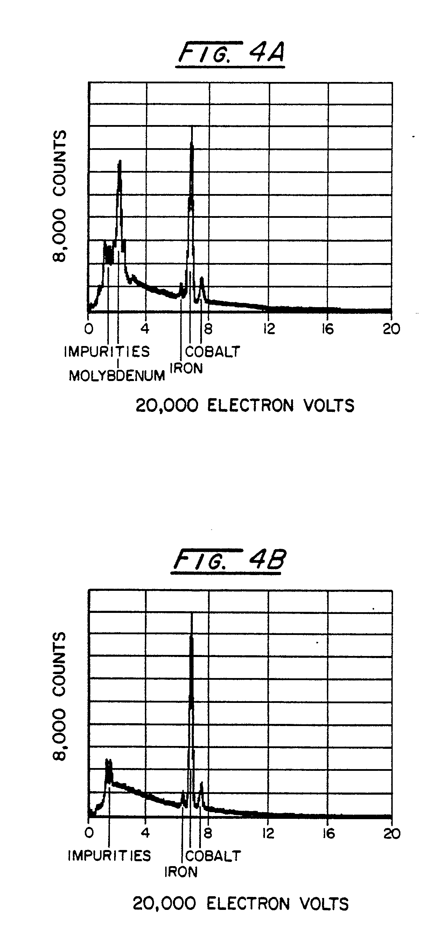

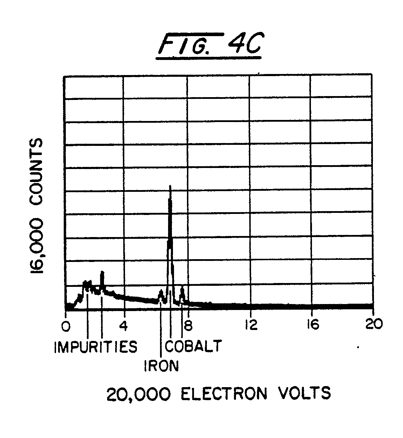

Figures 4A—C are energy dispersive X-ray spectra for several points through a cross section of the cylindrical diamond compact of Figure 3. Figures 4A, B, and C show cobalt concentration at points in the cross section corresponding approximately to those in Figures 2A, B, and C. No copper is indicated. It should be noted that Figures 4A and B have a vertical scale expanded to twice that of Figures 2A—C and 4C or 8,000 counts.

Best Mode for Carrying Out the Invention

One prepared form of HP/HT apparatus in which the compacts of this invention may be prepared is the subject of U.S. Patent 2,941,248, which is called a belt apparatus. It includes a pair of opposed cemented tungsten carbide punches and an intermediate belt or die member of the same material. The die member includes an aperture in which there is positioned a reaction vessel shaped to contain a charge assembly. Between each punch and the die there is a gasket assembly conprising a pair of thermally insulating and electrically non-conducting pyrophyllite members and an intermediate metallic gasket.

The reaction vessel, in one preferred form, includes a hollow salt cylinder. The cylinder may be of another material, such as talc, which (1) is not converted during HP/HT operation to a stronger, stiffer state (as by phase transformation and/or compaction) and (2) is substantially free of volume discontinuities occurring under the application of the high temperatures and pressures. Materials meeting the other criteria, set forth in U.S. Patent No. 3,030,622 (Col. 1, line 59 — Col. 1 line 2) are useful for preparing the cylinder.

Positioned concentrically within and adjacent to the cylinder is a graphite electrical resistance heater tube. Within the graphite heater tube, there is concentrically positioned a cylindrical salt liner. The ends of the liner are fitted with salt plugs disposed at the top and the bottom.

Electrically conductive metal end discs are utilized at each end of the cylinder to provide electrical connection to the graphite heater tube. Adjacent to each disc is an end cap assembly each of which comprises a pyrophyllite plug or disc surrounded by an electrically conducting ring.

Operational techniques for simultaneously applying both high pressures and high temperatures in this type of apparatus are well known to those skilled in the super-pressure art. The charge (or reaction zone) assembly fits within the space defined by the salt liner and the salt plugs. The charge assembly is comprised of a cylindrical sleeve and end caps of shield metal selected from the group consisting of zirconium, titanium, tantalum, tungsten and molybdenum. Within the shield metal sleeve are one or more sub-assemblies each defined by a shield metal disc and a shield metal cup.

The mass of abrasive diamond or CBN crystals is placed within the cavity defined by the cup and the disc and the diamond is lightly tamped into the cup. This mass may also contain graphite. A disc of catalyst/solvent (e.g. cobalt) or material containing catalyst/solvent is usually placed on top of the abrasive crystal mass. In the case of CBN, aluminum alloy may also be placed in the subassemblies. That is, a disc or discs of aluminum alloy and some other metal (usually nickel, cobalt, manganese, iron, vanadium or chromium) or preformed alloys of aluminum would be provided usually adjacent to the CBN particle mass.

The number of sub-assemblies within the reaction zone can be varied and is not critical. Each sub-assembly is usually separated by a separator disc made of an inert material such as dehydrated mica, hexagonal boron nitride or salt. The balance of the volume in the reaction zone assembly may be taken up with one or more discs made of the same material as the cylinder (e.g. pyrophyllite) and/or discs made of hexagonal boron nitride.

If composite compacts are desired, a mass of sintered metal bonded carbide (e.g. titanium, tungsten, or tantalum carbide) or carbide powder with appropriate metal bonding medium (e.g. cobalt, iron or nickel) would be placed within the sub-assemblies adjacent to the diamond or CBN. This would appear as a disc or layer either on top of or underneath the diamond crystal mass. If a wire drawing die type .compact is desired, the inner mass of diamond is disposed within a annulus of cold pressed sinterable metal carbide powder from which catalyst (e.g. cobalt) sweeps through radially into the diamond. The annulus may be made of fully sintered metal bonded carbide. The manufacture of composite compacts is well known, and more details may be found in U.S. Patents 3,745,623 and 3,831,428.

The charge assembly is loaded into the reaction vessel which is placed in the HP/HT belt apparatus. First, the pressure and then the temperature are increased and held at the desired conditions for sufficient time for sintering to occur. The sample is then allowed to cool under pressure for a short period of time, and finally the pressure is decreased to atmospheric pressure, and the compact is recovered.

The shield metal sleeve can be manually removed. Any adhering metal from the shield metal cup or disc can be ground or lapped off. Distortion or surface irregularity may be removed in the same manner.

After removal of any adhering cell materials from the compacts resulting from the HP/HT process, the recovered compacts comprise sintered polycrystalline diamond or CBN grains, and the interstices between the grains are occupied by a second phase comprising the catalyst/solvent. The second phase may also contain metal carbide. In order to make thermally stable compacts, this mass could be contacted first with a hot medium comprising nitric and hydroflouric acids (typically $1HF:1HNO_3$ volume ration mixture of boiling concentrated acids) and contacting it subsequently with a second hot medium comprising hydrochloric and nitric acids (e.g. boiling 3 $HC1:HNO_3$). Leaching times may be as long as 12 days for the first acid leaching step and as long as six days for the second. Substantially all of the catalyst/solvent material infiltrated into the compact body would be removed by this process if it were carried out for a sufficient length of time in accordance with the teaching of U.S. Patent 4,224,380. The result would be thermally stable compacts.

The preferred method of this invention is to place a layer of the intermediate lower melting metal at the interface of the abrasive powder and the catalyst/solvent source within each sub-assembly prior to HP/HT processing. This invention was tested by placing copper in between and at the interface of diamond powder and cobalt layers in a typical charge assembly. Also, a charge assembly was run without the cobalt to determine the effect of the copper alone. The cobalt sintered compact had a Knoop hardness comparable to commercially available diamond compacts and would not spall off when placed in an acid leaching bath. This indicates diamond-to-diamond bonding. The compact from the other charge assembly without cobalt catalyst spalled when placed in the acid bath which indicated no or very little diamond-to-diamond bonding or sintering by the copper.

As determined by scanning electron microscope and energy dispersive analysis of X-rays (see Figures 1 and 2A—C), cobalt was the predominant metallic element throughout the bulk of the diamond mass. There was a copper concentration gradient with most of the copper at the end of the compact farthest from where the catalyst source had been. The copper peaks increase in height as one goes from Figure 2A to 2C, showing the concentration gradient. The cobalt and iron shown are from the catalyst, and the molybdenum is from the shield metal. The impurities originate mostly from the grinding in preparation of the sample.

Since these experiments, a number of other tests have been made with and without metal carbide supports in order to confirm the quality of the sintered diamond masses. X-radiography indicates a relatively uniform cobalt distribution (see the figures) and a reduction in flaw frequency. Using this technique, flaws were reduced from over 90% to les than five percent in the case of cylindrical compacts about 5.3 mm diameter and 3.5 mm long made with diamond having a nominal largest dimension of 4—8 microns. Also, the surface morphology indicates a reduction in the pit type of defects. This has the advantage of reducing the need to remove flawed areas from tool blank compacts by grinding or lapping, and increases the yield of both tool blank and wire die type compacts.

**Claims**

1. A process for making a polycrystalline diamond compact by the sweep-through method, comprising subjecting a mass of diamond particles which is in contact with a catalyst for diamond recrystallization to a high pressure/high temperature process in a reaction cell, to form a compact having diamond-to-diamond bonding and containing an interstitial metal phase comprising catalyst,

characterized in that said process further comprises contacting said mass of diamond particles with an additional metal or metal alloy selected from single metals and non-catalytic alloys of such metals which (i) have a lower melting point than the catalyst, (ii) do not interfere with the function of the catalyst and (iii) are miscible with the catalyst,

the reaction cell being charged with said diamond particles, a source of said catalyst for diamond recrystallization and said additional metal or metal alloy in amounts and disposed such that, in the high pressure/high temperature process, said additional metal or metal alloy sweeps through the diamond mass, in contact with the particles thereof, ahead of the catalyst.

2. A process according to Claim 1, wherein the reaction cell is charged with said additional metal or metal alloy being mixed with said diamond particles.

3. A process according to Claim 1, wherein the reaction cell is charged with said aditional metal or metal alloy being disposed between said diamond particles and said source of catalyst.

4. A process according to any preceding claim, wherein said additional metal is selected from copper, tin, aluminum, magnesium and antimony.

5. A process according to Claim 4, wherein said additional metal is copper.

6. A process acording to any preceding claim, wherein said catalyst source is a mass selected from cemented metal carbide and carbide molding powders wherein at least part of the cementing agent is a catalyst.

7. A process according to any preceding claim, wherein the catalyst source is in the form of an annulus surrounding the diamond particles.

8. A process according to any preceding claim, which further comprises the step of removing substantially all of the metal phase from the compact.

9. A process for making a polycrystalline cubic boron nitride compact by the sweep-through method, comprising subjecting a mass of cubic boron nitride particles which is in contact with a sintering catalyst to a high pressure/high temperature process in a reaction cell, to form a compact having at least 70 volume percent cubic boron nitride content and an interstitial metal phase comprising catalyst within the resulting polycrystalline mass, characterized in that said process further comprises contacting said mass of cubic boron nitride particles with an additional metal or metal alloy selected from single metals and non-catalytic alloys of such metals which: (i) have a lower melting point than the catalyst, (ii) do not interfere with the function of the catalyst and (iii) are miscible with the catalyst, the reaction cell being charged with said cubic boron nitride particles, a source of said sintering catalyst and said additional metal or alloy in amounts and disposed such that, in the high pressure/high temperature process, said additional metal or metal alloy sweeps through the mass of cubic boron nitride, in contact with the particles thereof, ahead of the catalyst.

10. A process according to Claim 9, wherein the reaction cell is charged with said additional metal or metal alloy being mixed with the cubic boron nitride particles.

11. A process according to Claim 9, wherein the reaction cell is charged with said additional metal or metal alloy being disposed between said cubic boron nitride particles and said source of sintering catalyst.

12. A process according to one of Claims 9—11, wherein the additional metal is selected from copper, tin, aluminum, zinc, magnesium and antimony.

13. A process according to Claim 12, wherein the additional metal is copper.

14. A process according to any one of Claims 9—13, wherein the catalyst source is a mass selected from cemented metal carbide and carbide molding powders wherein at least part of the cementing agent is a catalyst.

15. A process according to any one of Claims 9—14, which further comprises the step of removing substantially all of the metal phase from the compact.

16. A polycrystalline diamond or cubic boron nitride compact having a first end and a second end and containing a catalyst and an additional metal or metal alloy within the interstices between crystal grains, there being in the compact a concentration gradient of the additional metal or metal alloy such that the concentration of additional metal and metal alloy is greater at the first end than at the second end.

**Patentansprüche**

1. Verfahren zur Herstellung eines polykristallinen Diamantpreßlings nach dem Durchdiffundierungsverfahren, bei dem eine Masse aus Diamantteilchen, die in Kontakt mit einem Katalysator für die Diamentumkristallisation steht, einem Hochdruck-/Hochtemperaturverfahren in einer Reaktionszelle unterworfen wird, um einen Preßling mit Diamant-Diamantbindung zu schaffen, der eine den Katalysator enthaltende interstitielle Metallphase aufweist, dadurch gekennzeichnet, daß das Verfahren weiterhin das Inkontaktbringen der Masse der Diamantteilchen mit einem zusätzlichen Metall oder einer Metallegierung umfaßt, die ausgewählt ist aus einzelen Metallen und nichtkatalytischen Legierungen solcher Metalle, welche (I) einen niedereren Schmelzpunkt als der Katalysator aufweisen, (II) nicht störend in die Funktion des Katalysators eingreifen und (III) mit dem Katalysator mischbar sind, die Reaktionszelle mit den besagten Diamantteilchen beschickt wird, eine Quelle des Katalysators für die Diamantumkristallisation und das zusätzliche Metall oder die Metallegierungen in solchen Mengen zugesetzt werden, daß bei dem Hochdruck-/Hochtemperaturverfahren das zusätzliche Metall oder die Metallegierung vor dem Katalysator durch die Diamantmasse in Kontakt mit dem Teilchen derselben hindurchdiffundiert.

2. Verfahren nach Anspruch 1, bei dem die Reaktionszelle mit dem zusätzlichen Metall oder der Metallegierung gemischt mit dem Diamantteilchen beschickt wird.

3. Verfahren nach Anspruch 1, bei dem die Reaktionszelle mit dem zusätzlichen Metall oder der Metallegierung, die zwishen den Diamantteilchen und der Katalysatorquelle angeordnet sind, beschickt wird.

4. Verfahren nach einem der vorhergehenden Ansprüche, bei dem das zusätzliche Metall ausgewählt ist aus Kupfer, Zinn, Aluminium, Zink, Magnesium und Antimon.

5. Verfahren nach Anspruch 4, worin das zusätzliche Metall Kupfer ist.

6. Verfahren nach einem der vorhergehenden Ansprüche worin die Katalysatorquelle eine Masse ist ausgewählt aus gesintertem Metallcarbid und Carbidformpulvern, worin wenigstens ein Teil des Sintermittels ein Katalysator ist.

7. Verfahren nach einem der vorhergehenden Ansprüche, worin die Katalysatorquelle in Form eines Kreisringes die Diamantteilchen umgibt.

8. Verfahren nach einem der vorhergehenden Ansprüche, welches weiterhin die Stufe der Entfernung von im wesentlichen der gesamten Metallphase von dem Preßling umfaßt.

9. Verfahren zur Herstellung eines polykristallinen kubischen Bornitritpreßlings nach dem Durchdiffundierungs verfahren, bei dem eine Masse aus kubischen Bornitritteilchen, die mit einem Sinterkatalysator in Kontakt steht, in einer Reaktionszelle einem Hochdruck-/Hochtemperaturverfahren unterworfen wird, um einem Preßling mit einem Gehalt an kubischem Bornitrit von wenigstens 70 Vol.-% und einer den Katalysator enthaltenden interstitiellen Metallphase innerhalb der erhaltenen kristallinen Masse zu ergeben, dadurch gekennzeichnet, daß das Verfahren weiterhin das Inkontaktbringen der Masse der kubischen Bornitritteilchen mit einem zusätzlichen Metall oder einer Metallegierung ausgewählt aus einzelnen Metallen und nichtkatalytischen Legierungen solcher Metalle umfaßt, welche (I) einen niedereren Schmelzpunkt als der Katalysator aufweisen, (II) in die Funktion des Katalysators nicht störend eingreifen und (III) mit dem Katalyator mischbar sind, die Reaktionszelle mit den kubischen Bornitritteilchen beschickt wird, eine Quelle des Sinterkatalysators und des zusätzlichen Metalls oder der zusätzlichen Metallegierung in solchen Mengen und in solcher Weise zugesetzt werden, daß bei dem Hochdruck-/Hochtemperaturverfahren das zusätzliche Metall oder die Metallegierung vor dem Katalysator in Kontakt mit dem Teilchen durch die Masse des kubischen Bornitrits hindurchdiffundiert.

10. Verfahren nach Anspruch 9, worin die Reaktionszelle mit dem zusätzlichen Metall oder der Metallegierung gemischt mit dem kubischen Bornitritteilchen beschickt wird.

11. Verfahren nach Anspruch 9, dadurch gekennzeichnet, daß die Reaktionszelle mit dem zusätzlichen Metall oder der Metallegierung, die zwischen den kubischen Bornitritteilchen und der Quelle des Sinterkatalysators angeordnet sind, beschickt wird.

12. Verfahren nach einem der Ansprüche 9 bis 11, worin das zusätzliche Metall ausgewählt ist aus Kupfer, Zinn, Aluminium, Zink, Magnesium und Antimon.

13. Verfahren nach Anspruch 12, worin das zusätzliche Metall Kupfer ist.

14. Verfahren nach einem der Ansprüche 9 bis 13, worin die Katalysatorquelle eine Masse ist, die ausgewählt ist aus gesintertem Metallcarbid und Carbidformpulvern, worin wenigstens ein Teil des Sintermittels ein Katalysator ist.

15. Verfahren nach einem der Ansprüche 9 bis 14, welches weiterhin die Stufe der Entfernung von im wesentlichen der gesamten Metallphase aus dem Preßling unfaßt.

16. Polykristalliner Preßling aus Diamant oder kubischem Bornitrit mit einem ersten Ende und einem zweiten Ende und der einem Katalysator und ein zusätzliches Metall oder eine Metallegierung auf den Zwischenplätzen zwischen den Kristallkörnern aufweist, wobei in den Preßling ein Konzentrationsgradient des zusätzlichen Metalls oder der Metallegierung in der Weise besteht, daß die Konzentration des zusätzlichen Metalls und der Metallegierung an dem ersten Ende größer ist als an dem zweiten Ende.

## Revendications

1. Procédé pour la fabrication d'un comprimé en diamant polycristallin par le procédé de balayage, comprenant l'étape de soumission d'une masse de particules de diamant qui est en contact avec un catalyseur pour la recristallisation du diamant suivant un processus à haute pression/haute température dans une cellule de réaction, afin de former un comprimé ayant une liaison diamant-diamant et contenant une métallique interstitielle comprenant un catalyseur, caractérisé en ce que le procédé comporte en outre l'étape consistant à mettre en contact la masse de particules de diamant avec un métal additionnel ou un alliage métallique choisi parmi des métaux uniques et des alliages non-catalytiques de ces métaux qui (i) ont un point de fusion inférieur à celui du catalyseur (ii) ne gênent pas la fonction du catalyseur et (iii) sont miscibles avec le catalyseur, la cellule de réaction étant chargée avec les particules de diamant, une source du catalyseur pour la recristalisation du diamant et le métal additionnel ou l'alliage métallique en quantités et disposée de façon que, dans le processus à haute pression/ haute température, le métal additionnel ou l'alliage métallique diffuse dans la masse du diamant, en contact avec ses particules, en tête du catalyseur.

2. Procédé selon la revendication 1, dans lequel la cellule de réaction est chargée avec le métal additionnel ou l'alliage métallique mélangé avec les particules de diamant.

3. Procédé selon la revendication 1, dans lequel la cellule de réaction est chargée avec le métal additionnel ou l'alliage métallique disposé entre les particules de diamant et la source du catalyseur.

4. Procédé selon l'une quelconque des revendications précédentes, dans lequel le métal additionnel est choisi parmi le cuivre, l'étain, l'aluminium, le zinc, le magnésium et l'antimoine.

5. Procédé selon la revendication 4, dans lequel le métal additionnel est le cuivre.

6. Procédé selon l'une quelconque des revendications précédentes, dans lequel la source de catalyseur est une masse choisie parmi les poudres de moulage de carbures et de carbures métalliques cémentés, dans lesquelles au moins une partie de l'agent de cémentation est un catalyseur.

7. Procédé selon l'une quelconque des revendications précédentes, dans lequel la source de catalyseur se présente sous la forme d'un anneau entourant les particules de diamant.

8. Procédé selon l'une quelconque des revendications précédentes, qui comprend en outre l'étape consistant à éliminer la quasi-totalité de la phase métallique du comprimé.

9. Procédé pour la fabrication d'un comprimé en nitrure de bore cubique polycristallin par le procédé de balayage, comprenant l'étape consistant à soumettre une masse de particules de nitrure de bore cubique qui est en contact avec un catalyseur de frittage à un processus à haute pression/haute température dans une cellule de réaction afin de former un comprimé ayant au moins une teneur en nitrure de bore cubique d'au moins 70% en volume et une phase métallique interstitielle comprenant ıe catalyseur à l'intérieur de la masse polycristalline résultante, caractérisé en ce que le procédé comporte en outre l'étape de mise en contact de la masse de particules de nitrure de bore cubique avec un métal additionnel ou un alliage métallique choisi parmi les métaux uniques et les alliages non-catalytiques de ces métaux qui: (i) ont un point de fusion inférieur à celui du catalyseur, (ii) ne gênent pas la fonction du catalyseur et (iii) sont miscibles avec le catalyseur, la cellule de réaction étant chargée avec les particules de nitrure de bore cubique, une source de catalyseur de frittage et le métal additionnel ou l'alliage métallique dans des quantités et suivant une disposition telles que, dans le processus à haute pression/haute température, le métal additionnel ou l'alliage diffuse dans la masse de niture de bore cubique, en contact avec ses particules, en tête du catalyseur.

10. Procédé selon la revendication 9, dans lequel la cellule de réaction est chargée avec le métal additionnel ou l'alliage métallique mélangé avec les particules de nitrure de bore cubique.

11. Procédé selon la revendication 9, dans lequel la cellule de réaction est chargée avec le métal additionnel ou l'alliage métallique disposé entre les particules de nitrure de bore cubique et la source catalyseur de frittage.

12. Procédé selon l'une des revendications 9—11, dans lequel le métal additionnel est choisi parmi le cuivre, l'étain, l'aluminium, le zinc, le magnésium et l'antimoine.

13. Procédé selon la revendication 12, dans lequel le métal additionnel est le cuivre.

14. Procédé selon l'une quelconque des revendications 9—13, dans lequel la source de catalyseur est une masse choisie parmi les poudres de moulage de carbures et de carbures métalliques cémentés, dans lesquelles au moins une partie de l'agent de cémentation est un catalyseur.

15. Procédé selon l'une quelconque des revendications 9—14, qui comprend en outre l'étape consistant à éliminer la quasi-totalité de la phase métallique du comprimé.

16. Comprimé en diamant polycristallin ou en nitrure de bore cubique ayant une première et une seconde extrémité et contenant un catalyseur et un métal additionnel ou un alliage métallique à l'intérieur des interstices entre les grains cristallins, un gradient de la concentration du métal additionnel ou de l'alliage métallique étant présent d'une façon telle que la concentration du métal l'alliage soit plus grande à la première extrémité qu'à la seconde extrémité.

FIG. 1

## FIG. 2A

COPPER
IMPURITIES
MOLYBDENUM
IRON
COBALT
COPPER

16,000 COUNTS

20,000 ELECTRON VOLTS

## FIG. 2B

COPPER
IMPURITIES
IRON
COBALT
COPPER

16,000 COUNTS

20,000 ELECTRON VOLTS

# FIG. 2C

COPPER
IMPURITIES
IRON
COBALT
COPPER

16,000 COUNTS

20,000 ELECTRON VOLTS

FIG. 3

## FIG. 4A

IMPURITIES  
MOLYBDENUM IRON  
COBALT

20,000 ELECTRON VOLTS

## FIG. 4B

IMPURITIES  
IRON  
COBALT

20,000 ELECTRON VOLTS

# FIG. 4C

16,000 COUNTS

IMPURITIES     COBALT

IRON

20,000 ELECTRON VOLTS